# EUROPEAN PATENT SPECIFICATION

(11) **EP 3 772 630 B1**
(45) Date of publication and mention of the grant of the patent: **23.03.2022**
(21) Application number: 19190284.0
(22) Date of filing: 06.08.2019
(51) Int. Cl.: F28F 27/00, F02C 7/14, F02C 7/224, F28F 27/02

(54) **HEAT EXCHANGER BLOCKAGE DETECTION**
WÄRMETAUSCHERBLOCKIERUNGSDETEKTION
DÉTECTION DE BLOCAGE D'ÉCHANGEUR DE CHALEUR

(43) Date of publication of application: 10.02.2021
(73) Proprietor: Rolls-Royce Deutschland Ltd & Co KG, 15827 Blankenfelde-Mahlow (DE)
(72) Inventor: KACPROWSKI, Bastian, 15827 Blankenfelde-Mahlow (DE); DE FALCO, Raphael Louis Michel, 15827 Blankenfelde-Mahlow (DE)
(74) Representative: Maikowski & Ninnemann Patentanwälte Partnerschaft mbB

(56) References cited:
- EP-A1- 2 837 798
- GB-A- 2 510 654
- US-A1- 2010 186 943

## Description

The present disclosure relates to a system and a method for detecting a blockage of a heat exchanger.

Heat exchangers are used to exchange heat between fluids. When a fluid guided through a heat exchanger contains solid particles, the heat exchanger may be blocked, so in many applications a bypass is used to avoid an interruption of a circulation of the fluid. By opening the bypass, the heat exchanger no longer heats or cools the fluid so that its temperature may change. In order to allow a quick reaction on the blockage, e.g., by stopping an engine, it is necessary to monitor the status of the bypass. The status may be monitored by using a pressure switch or a pressure transducer. However, such components usually require a regular maintenance. Depending on the application of the heat exchanger, such maintenance may be time consuming.

In the field of aircraft engines heat exchangers are used, e.g., to exchange heat between fuel and oil. Potential sources for a blockage of such a heat exchanger are contaminations of the fluid or a flocculation due to low ambient temperatures.

GB 2510654 A describes a method for monitoring the performance of a heat exchanger. The method comprises the steps of: a) measuring a first temperature of a first fluid at an exit from the heat exchanger; b) measuring a second temperature of a second fluid at an entry to the heat exchanger; c) determining for the first and second temperature measurements, a temperature difference therebetween; d) comparing the temperature difference to a threshold value indicative of a blockage (partial I complete) of the first fluid flow path through the heat exchanger; and e) if the temperature difference is greater than the threshold value, generating a first alert signal to indicate a deterioration in the heat exchanger performance.

It is an object to provide an improved monitoring of a heat exchanger.

According an aspect there is provided a system for detecting a heat exchanger blockage. The system comprises a heat exchanger and a bypass for the heat exchanger. The system further comprises a temperature sensor for measuring a temperature of a fluid downstream the heat exchanger so as to obtain a measured fluid temperature, and a control system. The control system is adapted to determine a gradient of the fluid temperature, and to detect an opening of the bypass based on the gradient of the fluid temperature. The control system is further adapted to provide a signal indicating a bypass opening in response to the detection of the opening of the bypass.

The system allows to quickly and reliably detect a bypass opening without the need for a pressure transducer or switch. This may reduce the requirements for maintenance and may reduce the weight of the system.

The heat exchanger comprises at least two fluid circuits. Two fluids can be directed through the fluid circuits so as to exchange heat.

The control system may be adapted to detect a bypass opening by performing a comparison of a value or signature based on the measured fluid temperature(s) with a predetermined value or signature.

A valve may be arranged at the bypass. For example, the valve is arranged in the bypass. When the valve is opened, the fluid may flow through the bypass without flowing through the heat exchanger.

Optionally, the valve is a mechanical valve. The valve may be adapted to be opened by a fluid upstream and/or inside the heat exchanger (and upstream the valve) when a pressure in the fluid exceeds a predetermined threshold. This allows a particularly simple and reliable arrangement. The mechanical valve may be devoid of any electrical or electronical components. It does not provide a signal when it changes it state, e.g., from closed to open. By contrast, the state is indirectly determined by analyzing the temperature of the fluid downstream the heat exchanger. The valve may comprise an elastic element, such as a spring. A pressure in the fluid upstream the heat exchanger may act against a force of the elastic element. When the pressure exceeds a predetermined threshold, the pressure overcomes the force of the elastic element and opens the valve.

Optionally, the heat exchanger is a fuel-cooled oil cooler (FCOC). One fluid circuit of the heat exchanger may be adapted to receive and guide a fuel, the other fluid circuit of the heat exchanger may be adapted to receive and guide an oil. The heat exchanger may particularly be adapted for an aircraft engine, in particular for a gas turbine engine.

The temperature sensor may be arranged to measure a fuel temperature or an oil temperature. Further, the temperature sensor may be arranged at a fuel circuit or at an oil circuit, in particular downstream the heat exchanger.

The temperature sensor may be arranged to measure a fuel temperature and a further temperature sensor may be may be arranged to measure an oil temperature. Further, detecting a bypass opening may be based on the oil and fuel temperatures measured by the temperature sensors, e.g., may comprise performing a comparison with predetermined values based on the oil and fuel temperatures measured by the temperature sensors. By this, an accuracy of the bypass opening detection may be further improved and a response time for this detection may be reduced.

The bypass may connect a duct upstream the heat exchanger with a duct downstream the heat exchanger, wherein the ducts are in fluid connection via the heat exchanger at least when the heat exchanger is not blocked.

According to an aspect, an aircraft is provided, the aircraft comprising the system according to any aspect or embodiment described herein.

According to an aspect, a method for detecting a heat exchanger blockage is provided. The method comprises measuring a temperature of a fluid downstream of a heat exchanger, wherein the heat exchanger has a bypass. The method further comprises detecting an opening of the bypass based on the measured fluid temperature, e.g. by performing a comparison of a value or signature based on the measured fluid temperature with a predetermined value or signature. Further, the method comprises providing a signal indicating a bypass opening in response to the detection of the opening of the bypass.

The method further comprises determining a derivative, namely a gradient of the fluid temperature. The derivative may be used for the comparison. The derivative may be compared with a predetermined value, e.g., a threshold.

Detecting the bypass opening may further comprise determining an operating parameter of an engine, e.g., of an engine comprising the system. This may further improve the accuracy of the detection of a bypass opening.

The operating parameter may be a thrust and/or a thrust demand for the engine or a speed of the engine. The operating parameter may be, e.g., a rotational speed, or an environmental temperature.

The method may further comprise providing the signal indicating the bypass opening to a user interface, e.g., in a cockpit of an airplane. By this a user of the system, e.g., a pilot of the airplane, may quickly react on the detected heat exchanger blocking. For example, the engine may be stopped.

In the method, the system according to any aspect or embodiment described herein may be used. Correspondingly, the system described herein may be adapted to perform the method according to any aspect or embodiment described herein.

According to an aspect, a non-volatile, computer-readable storage medium is provided. The storage medium has stored instructions thereon which, when the instructions are executed by one or more processors of a system, cause the system to: measure a temperature of a fluid downstream a heat exchanger, the heat exchanger having a bypass; detect a bypass opening based on the measured fluid temperature, e.g., by performing a comparison of a value or signature based on the measured fluid temperature with a predetermined value or signature; and provide a exchanger having a bypass; detect a bypass opening based on the measured fluid temperature, e.g., by performing a comparison of a value or signature based on the measured fluid temperature with a predetermined value or signature; and provide a signal indicating the bypass opening in response to the detection of the bypass opening.

The storage medium may comprise instructions which, when the instructions are executed by one or more processors of a system, cause the system (e.g., the system according to any aspect or embodiment described herein) to perform the method according to any aspect or embodiment described herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
- Figure 1: is a system for detecting a heat exchanger blockage;
- Figures 2 and 3: are diagrams showing temperatures measured by a temperature sensor of the system according to Figure 1, and derivatives thereof;
- Figure 4: is a sectional side view of a gas turbine engine;
- Figure 5: shows an aircraft; and
- Figure 6: is a method for detecting a heat exchanger blockage.

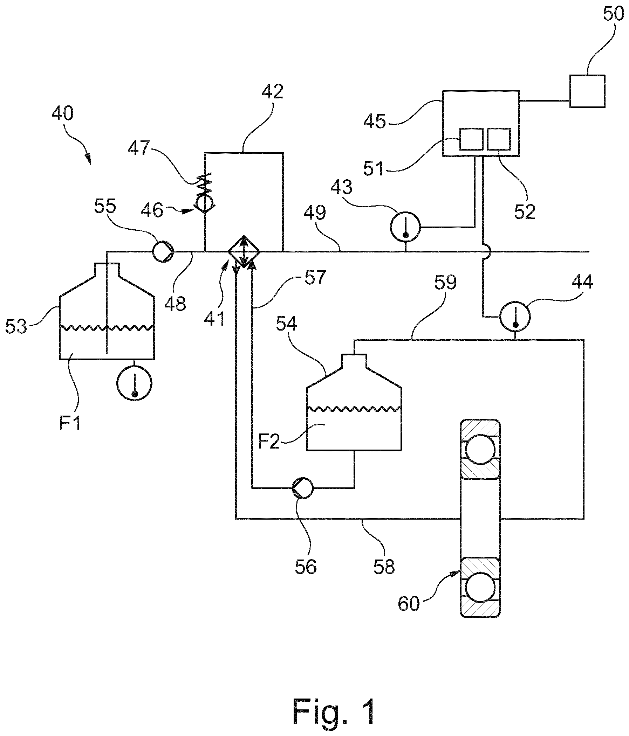

Figure 1 shows a system 40 for detecting a heat exchanger blockage. The system 40 comprises a heat exchanger 41. The heat exchanger 41 has two fluid circuits, one for each of two fluids F1, F2.

A first fluid F1 is stored in a tank 53. The tank 53 is connected to one of the fluid circuits of the heat exchanger 41 via a ducting 48 upstream the heat exchanger 41. The first fluid F1 may be supplied to the heat exchanger 41 from the tank 53 by means of a pump 55. After the passing the heat exchanger 41, the first fluid F1 is guided through a ducting 49 downstream the heat exchanger 41.

A second fluid F2 is stored in another tank 54. The tank 54 storing the second fluid F2 is connected to the other one of the fluid circuits of the heat exchanger 41 via a ducting 57. Second fluid F2 stored in the tank 54 may be provided to the heat exchanger 41. The second fluid F2 may be supplied to the heat exchanger 41 from the tank 54 by means of a pump 56. After passing the heat exchanger 41, the second fluid F2 is guided through a ducting 58 that connects the heat exchanger 41 with a heat source 60. Another ducting 59 connects the heat source 60 with the tank 54, so that second fluid F2 may be returned to the tank 54 after passing the heat source 60.

Typically, the first fluid F1 in the tank 53 has a lower temperature than the second fluid F2 in the other tank 54, because the second fluid F2 is heated by the heat source 60. By passing through the heat exchanger 41, heat is exchanged from the second fluid F2 to the first fluid F1.

In case that the first fluid F1 is contaminated by particles or flocculates due to low temperatures, the fluid circuit for the first fluid F1 of the heat exchanger 41 may be blocked. As a result, the second fluid F2 is cooled at a reduced efficiency or no longer cooled at all. By this, the heat source 60 may heat up. Further, depending on the application of the system 40, a flow of the first fluid F1 may be required not to be stopped. For example, this may potentially damage the pump 55 or the ducting 48, or an uninterrupted provision of the first fluid F1 may be required.

In order to avoid an interruption of provisioning of the first fluid F1 and/or e.g. an overpressure in the ducting 48 upstream the heat exchanger 41, the system 40 comprises a bypass 42. The bypass 42 connects the ducting 48 upstream the heat exchanger 41 with the ducting 49 downstream the heat exchanger 41, to allow first fluid F1 to bypass the heat exchanger 41.

A valve 46 is arranged at the bypass 42. The valve 46 is a mechanical valve having no electrical or electronical components. The valve 46 comprises an elastic element 47, in the present example, in the form of a spring. The valve 46 has a closed state and an opened state. In the closed state, the valve 46 does not allow first fluid F1 to pass though the bypass 42. In the opened state, the valve 46 allows first fluid F1 to pass through the bypass 42 for bypassing the heat exchanger 41.

The elastic element 47 pretensions the valve 46 in the closed state. The state of the valve 46 depends on the pressure within the ducting 48 upstream the heat exchanger 41 (and downstream the pump 55). As long as the pressure is below a predetermined threshold, the valve 46 remains in its closed state. When the pressure exceeds the threshold, the valve 46 opens. Thus, when the fluid circuit of the heat exchanger 41 for the first fluid F1 is blocked, the pressure at the valve 46 increases until exceeding the predetermined threshold, so that the valve 46 opens and the first fluid F1 bypasses the heat exchanger 41 by flowing though the bypass 42.

The two fluids F1, F2 have different temperatures when being supplied to the heat exchanger 41. When the first fluid F1 flows though the bypass 42 instead of through the heat exchanger 41, heat is no longer exchanged between the first and second fluids F1, F2, so that the temperature of the first fluid F1 in the ducting 49 downstream the heat exchanger 41 is different from what it would be after flowing through the heat exchanger 41. Similarly, the temperature of the second fluid F2 will be different after exiting the heat exchanger 41, when the first fluid F1 flows though the heat exchanger 41 compared to when the first fluid F1 would not flow through the heat exchanger 41.

The system 40 comprises at least one temperature sensor to measure the temperature of at least one of the first fluid F1 and the second fluid F2. According to Figure 1, the system comprises two temperature sensors 43, 44, one for each of the first and second fluids F1, F2 (and one optional further temperature sensor for measuring the temperature in the tank 53). One temperature sensor 43 is arranged at the ducting 49 for the first fluid F1 downstream the heat exchanger 41. In other words, at least one temperature sensor 43 may be arranged at a fluid path being in fluid connection (at least when the valve 46 is open) with the bypass 42. Another temperature sensor 44 is arranged so as to measure the temperature of the second fluid. According to Figure 1, the other temperature sensor 44 is arranged at the ducting 59 between the tank 54 and the heat source 60, while other arrangements are also conceivable, e.g., at the ducting 57 between the tank 54 and the heat exchanger 41, or at the ducting 58 between the heat exchanger 41 and the heat source 60.

The system 40 comprises a control system 45 connected with the temperature sensors 43, 44 so as to receive temperature sensor data therefrom, the temperature sensor data being indicative for one or more temperatures of the first and/or second fluids F1, F2. The control system 45 comprises a processor 52 to analyze the temperature sensor data, and to detect an opening of the bypass 42 based on the received temperature sensor data, i.e., based on the measured temperature(s). Further, the control system 45 comprises a storage medium 51 storing predetermined values and/or signatures. The control system 45 is adapted to determine values and/or signatures from the measured temperatures (wherein any signal or data indicative for a measured temperature is regarded as at least one measured temperature), and to compare the measured values and/or signatures with the predetermined values and/or signatures.

For example, the processor 52 may determine that the bypass 42 is open when a measured value is larger than a predetermined value, e.g., when the measured temperature (or a derivative thereof) of the first fluid F1 is larger than the predetermined threshold value.

As another example, the processor 52 may determine that the bypass 42 is open when a measured temperature signature, e.g. a temperature profile, is similar to a predetermined signature.

Further, sensor data from both temperature sensors 43, 44 may be used in the determination of whether or not the bypass 42 is open. For example, the processor 52 may determine a likelihood for a bypass opening, which may be increased when the temperature measured by the temperature sensor 43 for the first fluid F1 decreases and/or when the temperature measured by the temperature sensor 44 for the second fluid F2 increases.

The temperature sensors 43, 44 may be temperature transducers.

In the present example, the heat exchanger 41 is a fuel cooled oil cooler for an aircraft gas turbine engine. The first fluid F1 is a fuel and the second fluid F2 is an oil. The fuel is supplied to a combustor via the ducting 49 downstream the heat exchanger 41. The oil is heated by the heat source 60, which in the present example is a bearing. The oil lubricates the bearing and, in turn, gets heated. When the oil becomes too hot, wear of the bearing may increase. On the other hand, in aircrafts the fuel tank 53 is often arranged in wings of the aircraft and gets cooled by cold wind during the flight. For an efficient combustion of the fuel, it is often advantageous to heat the fuel to a certain temperature. Therefore, the cold fuel may be heated by the hot oil, and the hot oil cooled by the cold fuel from the tank 53.

When the gas turbine engine is producing a large thrust, more fuel is burnt in the same period of time compared to when the gas turbine engine is producing a lower thrust. Correspondingly, more fuel flows through the heat exchanger 41 in the same period of time and may be less effectively heated. This may lead to a decrease in fuel temperature without a bypass opening. To increase the accuracy of the detection of a bypass opening, the control system 45 may be adapted to take a fuel flow rate, a thrust value (e.g., a current thrust, a thrust demand or a thrust setting, e.g., high power, low power, Accelerating or decelerating), a fuel-return-to-tank-valve position or another operating parameter into account in the detection of a bypass opening.

Further, when the gas turbine engine is running at a high rotational speed, the bearing (heat source 60) may create more heat than when running at a low rotational speed. This may result in an increase of the temperatures measured at the oil temperature sensor 44. Alternatively or in addition to taking a thrust or similar value into account, the control system 45 may be adapted to take a shaft speed (in particular of a high-pressure shaft) or a further operational condition of the gas turbine engine into account in the detection of a bypass opening to increase the accuracy of the detection of a bypass opening. Further, a current or preceding flight maneuver (e.g. take-off, cruise etc.) may be taken into account and/or an altitude and/or flight phase. As a further alternative or additional option, a difference between two temperatures, e.g., an oil temperature and a fuel temperature, may be determined for the detection of a bypass opening, and/or a fuel flow rate and/or an ambient temperature.

As a further alternative or addition, a first fluid F1 tank 53 temperature may be measured and taken into account.

One, more than one or all of these values may be taken into account to determine a likelihood that the bypass 42 is open. When the likelihood exceeds a certain limit, the control system 45 (e.g., the processor 52) may determine that a bypass opening is detected.

When a bypass opening is detected, the control system 45 generates and provides a signal, e.g., a data packet, indicative for the bypass opening. This signal may be transmitted to a user interface 50. The user interface may provide a visual and/or audible notification, e.g. to a pilot. The pilot may then decide to turn off the gas turbine engine, to not fly a certain maneuver, to reduce the thrust demand or the like. Alternatively or in addition, the signal may be provided to a remote computing system, e.g. on the ground, for example via a wireless communication interface. Optionally, the signal may trigger a maintenance operation. As another example, the frequency of such signals may be determined, e.g., by the control system 45.

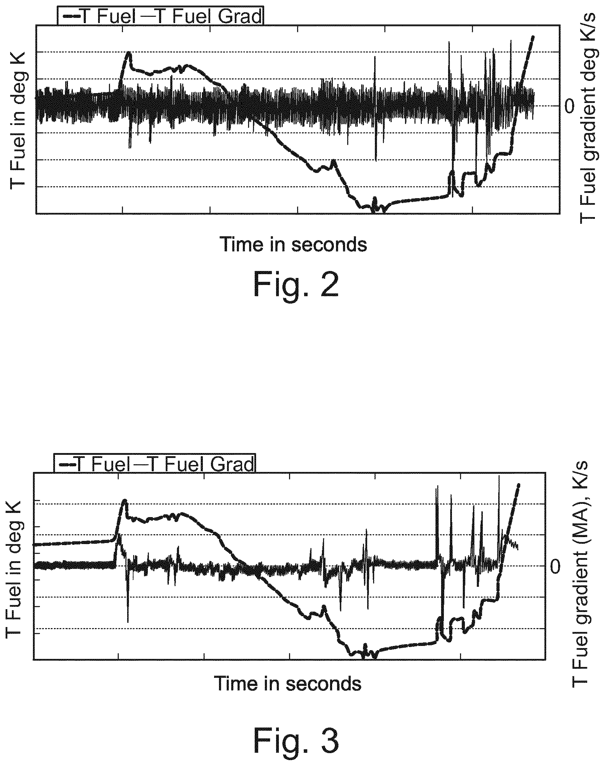

Figure 2 shows the fuel temperature measured by the fuel temperature sensor 43 as well as (based thereon) the fuel temperature gradient (in K/s) versus time. According to Figure 2, the measured fuel temperature changes over time depending on the state of the aircraft, in particular constantly decreases after take-off of the aircraft. At low temperatures, the fuel may flocculate leading to a blocking of the heat exchanger 41 which is followed by a bypass opening (by an opening of the valve 46). This may lead to sudden changes in the measured fuel temperatures as seen in the right half of the diagram shown in Figure 2. As such, a quick change in the measured fuel temperature (in general of the measured fluid temperature) may be indicative of a bypass opening. Further, an exceedance of a given threshold may also be indicative for a bypass opening, e.g. as shown at the right in Figure 2.

A gradual blockage may be due to debris or contamination in a fluid, e.g. fuel. This may particularly accurately be determined when measuring the temperatures of both fluids F1, F2, e.g. fuel and oil (with the temperature sensors 43, 44), optionally also taking into account an ambient temperature and/or a fuel tank temperature.

To trigger a bypass opening detection, the control system 45 may determine the measured fuel temperature gradient. A peak in the temperature gradient value versus time exceeding a given threshold may indicate a bypass opening.

Fluctuations in the data, however, may hide such peaks. Therefore, the control system 45 determines a moving average (MA) of the measured temperature gradient.

Figure 3 shows the measured temperature profile of Figure 2, and the moving average of the corresponding measured temperature gradient versus time.

Therein, peaks in the moving average can be identified with a high accuracy. For example, the control system 45 uses a peak finding algorithm to determine the presence of a peak (e.g., above a given threshold), and decides that a bypass opening is detected when a peak (e.g., above a given threshold) is found.

For example, the moving average of the gradient of the fuel temperature is calculated using more than 10, e.g., 30 data points and/or the moving average of the gradient of the oil temperature is calculated using more than 10, e.g., 60 data points.

As a further example, the control system 45 may compare a measured temperature profile, such as shown in Figures 2 and 3 and/or the gradients (or their moving averages) with one or more corresponding profile(s) where it is known that the bypass 42 is open or is not open to detect a bypass opening.

Further, a model (e.g., a machine-learning model) may be trained with temperature sensor data of one or more of the temperature sensors 43, 44 and from a pressure switch or transducer arranged to sense a bypass opening. The model may then be executed to evaluate whether further temperature sensor data indicates a bypass opening (where no pressure switch or transducer is provided) or not. The model may be stored on the storage medium 51 and may be executed by the processor 52.

The model may be based on unsupervised learning.

Another option is to apply a data-driven model (in particular, using supervised machine learning) to predict the fuel and/or oil temperature (at the corresponding temperature sensor(s) 43, 44) for a given combination of fuel flow, ambient and fuel tank temperature and/or engine power setting. This can then be compared to the measured values, and a deviation beyond a given threshold indicates a bypass valve opening.

Alternatively or in addition, the number of standard deviations from a mean of a data point (e.g., a temperature or temperature-derived value, optionally at certain operational conditions) is determined.

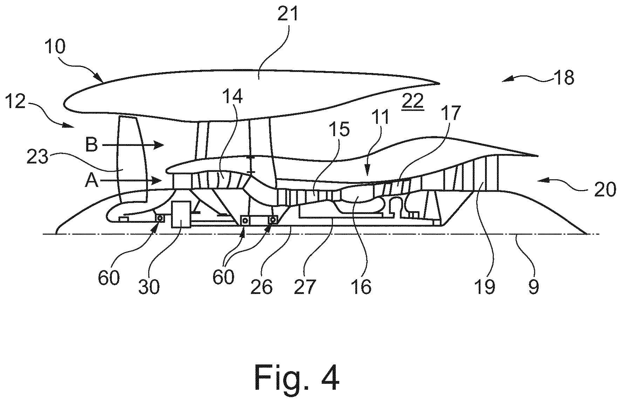

Figure 4 illustrates a gas turbine engine 10 for an aircraft. The gas turbine engine 10 has a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 (low-pressure shaft) and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27 (high-pressure shaft). The fan 23 generally provides the majority of the propulsive thrust. The epicyclic gearbox 30 is a reduction gearbox.

The gas turbine engine 10 comprises the system 40 of Figure 1 or is connected thereto. In this example, the gas turbine engine 10 comprises a plurality of heat sources 60, which are, here, a shaft bearing each. One or more (e.g. sequentially or in parallel) of these bearings may be supplied with oil by the system 40.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 4 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 4), and a circumferential direction (perpendicular to the page in the Figure 4 view). The axial, radial and circumferential directions are mutually perpendicular.

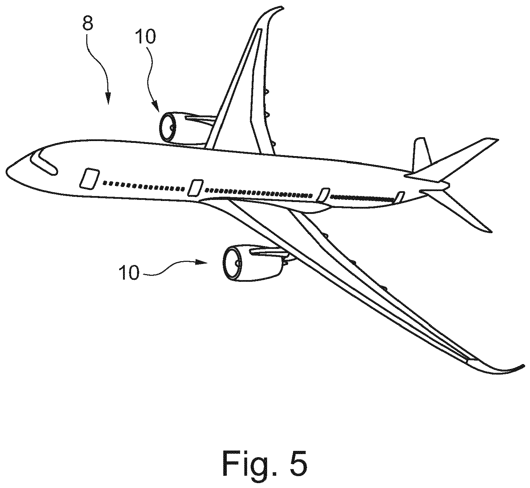

Figure 5 shows an aircraft 8 having a plurality of gas turbine engines 10 in accordance with Figure 4, and the system 40 of Figure 1. Each of the gas turbine engines 10 are mounted on a wing of the aircraft 8.

The aircraft 8 may comprise one system 40 for each gas turbine engine 10, or one system 40 for more than one gas turbine engine 10. The fuel tank 53 is arranged, e.g. in several compartments, at least partially in one or more of the wings.

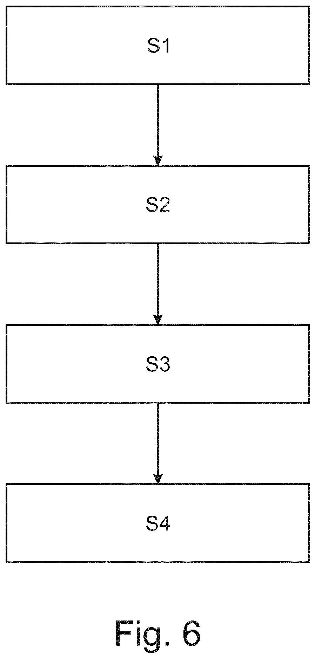

Figure 6 shows a method for detecting a heat exchanger blockage. The method comprises the following steps:
Step S1: Measuring a temperature of a fluid F1, F2 downstream the heat exchanger 41, the heat exchanger 41 having a bypass 42. The fluid F1, F2 of which the temperature is measured, may be the fluid F1 that may flow through the bypass when the bypass is open, or it may be another fluid F2.
Step S2 (optional): Determining a gradient of the measured fluid temperature.
Step S3: Detecting a bypass opening of the bypass 42 based on the measured fluid temperature, e.g. based on the gradient, in particular based on the moving average of the gradient. Optionally, detecting the bypass opening further comprises determining an operating parameter of an engine, in particular of the gas turbine engine 10. For example, the operating parameter is a thrust demand for the gas turbine engine 10 or a speed of the gas turbine engine.
Step S4: Providing a signal indicating the bypass opening in response to the detection of the bypass opening of the bypass 42, and, optionally, providing the signal indicating the bypass opening to a user interface 50.

The storage medium 51 (see Figure 1) may comprise computer-executable instructions which, when the instructions are executed by the processor 52 (and, optionally, one or more further processors), cause the system 40 to perform the method of Figure 6.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

For example, a second fluid F2 temperature sensor 44 may alternatively or in addition be arranged downstream the heat exchanger 41 and upstream the tank 54 and/or upstream the heat source 60.

Further it is emphasized that the system 40 according to Figure 2 is also applicable to other fields where heat exchangers are applied and, optionally, having other heat sources 60 than bearings.

It is also worth noting that the control system 45 may be arranged at the aircraft 8 or at another device having the heat exchanger 41, or it may be located remotely thereof, e.g., on the ground. The communication between the temperature sensor(s) 43, 44 and the control system may be by means or wires or wireless.

### List of reference numbers

- 8: aircraft
- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 26: shaft
- 27: interconnecting shaft
- 30: gearbox
- 40: system
- 41: heat exchanger
- 42: bypass
- 43, 44: temperature sensor
- 45: control system
- 46: valve
- 47: spring (elastic element)
- 48, 49: ducting
- 50: user interface
- 51: storage medium
- 52: processor
- 53, 54: tank
- 55, 56: pump
- 57-59: ducting
- 60: heat source (bearing)
- A: core airflow
- B: bypass airflow
- F1, F2: fluid

## Claims

1. A system (40) for detecting a heat exchanger blockage, comprising:
- a heat exchanger (41) and a bypass (42) for the heat exchanger (41);
- a temperature sensor (43) for measuring a temperature of a fluid (F1, F2) downstream the heat exchanger (41); the system being **characterized by**
- a control system (45) adapted to determine a gradient of the fluid temperature, to detect a bypass opening based on the gradient of the fluid temperature, and to provide a signal indicating the bypass opening in response to the detection of the bypass opening.

2. The system (40) according to claim 1, wherein the control system (45) is adapted to detect a bypass opening by performing a comparison of a value or signature based on the measured fluid temperature with a predetermined value or signature.

3. The system (40) according to claim 1 or 2, wherein a valve (46) is arranged at the bypass (42).

4. The system (40) according to claim 3, wherein the valve (46) is a mechanical valve, adapted to be opened by a fluid (F1) upstream and/or inside the heat exchanger (41) when a pressure in the fluid (F1) exceeds a predetermined threshold.

5. The system (40) according to any of the preceding claims, wherein the heat exchanger (41) is a fuel-cooled oil cooler.

6. The system (40) according to claim 5, wherein the temperature sensor (43) is arranged to measure a fuel temperature or an oil temperature.

7. The system (40) according to any of the preceding claims, wherein the temperature sensor (43) is arranged to measure a fuel temperature and a further temperature sensor (44) is arranged to measure an oil temperature wherein detecting a bypass opening comprises performing a comparison with predetermined values based on the oil and fuel temperatures measured by the temperature sensors (43, 44).

8. The system (40) according to any of the preceding claims, wherein the bypass (42) connects a duct (48) upstream the heat exchanger (41) with a duct (49) downstream the heat exchanger (49).

9. An aircraft (8) comprising the system (40) according to any of the preceding claims.

10. A method of detecting a heat exchanger blockage, comprising:
- measuring (S1) a temperature of a fluid (F1, F1) downstream a heat exchanger (41), the heat exchanger (41) having a bypass (42);
- determining (S2) a gradient of the fluid temperature;
- detecting (S3) a bypass opening based on the gradient of the fluid temperature; and
- providing (S4) a signal indicating the bypass opening in response to the detection of the bypass opening.

11. The method according to claim 10, wherein detecting the bypass opening further comprises determining an operating parameter of an engine (10).

12. The method according to claim 11, wherein the operating parameter is a thrust demand for the engine (10) or a speed of the engine (10).

13. The method according to any of claims 10 to 12, further comprising providing the signal indicating the bypass opening to a user interface (50).

14. A non-volatile, computer-readable storage medium (51), having stored instructions thereon which, when executed by one or more processors (52), cause a system (40) to:
- measure a temperature of a fluid (F1) downstream a heat exchanger (41), the heat exchanger (41) having a bypass (42);
- determine a gradient of the fluid temperature;
- detect a bypass opening based on the gradient of the fluid temperature; and
- provide a signal indicating the bypass opening in response to the detection of the bypass opening.

## Patentansprüche

1. System (40) zum Detektieren einer Wärmetauscherblockade, aufweisend:
- einen Wärmetauscher (41) und einen Bypass (42) für den Wärmetauscher (41);
- einen Temperatursensor (43) zum Messen einer Temperatur eines Fluids (F1, F2) stromabwärts des Wärmetauschers (41); wobei das System **gekennzeichnet ist durch**
- ein Steuersystem (45), das dazu ausgelegt ist, einen Gradienten der Fluidtemperatur zu bestimmen, eine Bypassöffnung basierend auf dem Gradienten der Fluidtemperatur zu detektieren und in Reaktion auf die Detektion der Bypassöffnung ein Signal bereitzustellen, das die Bypassöffnung anzeigt.

2. System (40) nach Anspruch 1, wobei das Steuersystem (45) dazu ausgelegt ist, eine Bypassöffnung durch Durchführen eines Vergleichs eines Werts oder einer Charakteristik, der bzw. die auf der gemessenen Fluidtemperatur basiert, mit einem vorbestimmten Wert oder einer vorbestimmten Charakteristik zu detektieren.

3. System (40) nach Anspruch 1 oder 2, wobei ein Ventil (46) an dem Bypass (42) angeordnet ist.

4. System (40) nach Anspruch 3, wobei das Ventil (46) ein mechanisches Ventil ist, das dazu ausgelegt ist, durch ein Fluid (F1) stromaufwärts und/oder in dem Wärmetauscher (41) geöffnet zu werden, wenn ein Druck in dem Fluid (F1) einen vorbestimmten Schwellenwert übersteigt.

5. System (40) nach einem der vorhergehenden Ansprüche, wobei der Wärmetauscher (41) ein kraftstoffgekühlter Ölkühler ist.

6. System (40) nach Anspruch 5, wobei der Temperatursensor (43) eingerichtet ist, eine Kraftstofftemperatur oder eine Öltemperatur zu messen.

7. System (40) nach einem der vorhergehenden Ansprüche, wobei der Temperatursensor (43) eingerichtet ist, eine Kraftstofftemperatur zu messen, und ein weiterer Temperatursensor (44) eingerichtet ist, eine Öltemperatur zu messen, wobei das Detektieren einer Bypassöffnung ein Durchführen eines Vergleichs mit vorbestimmten Werten basierend auf den Öl- und Kraftstofftemperaturen, die durch die Temperatursensoren (43, 44) gemessen wurden, umfasst.

8. System (40) nach einem der vorhergehenden Ansprüche, wobei der Bypass (42) einen Kanal (48) stromaufwärts des Wärmetauschers (41) mit einem Kanal (49) stromabwärts des Wärmetauschers (49) verbindet.

9. Luftfahrzeug (8), umfassend das System (40) nach einem der vorhergehenden Ansprüche.

10. Verfahren zum Detektieren einer Wärmetauscherblockade, umfassend:
- Messen (S1) einer Temperatur eines Fluids (F1, F2) stromabwärts eines Wärmetauschers (41), wobei der Wärmetauscher (41) einen Bypass (42) aufweist;
- Bestimmen (S2) eines Gradienten der Fluidtemperatur;
- Detektieren (S3) einer Bypassöffnung basierend auf dem Gradienten der Fluidtemperatur; und
- Bereitstellen (S4) eines Signals, das die Bypassöffnung anzeigt, in Reaktion auf die Detektion der Bypassöffnung.

11. Verfahren nach Anspruch 10, wobei das Detektieren der Bypassöffnung ferner ein Bestimmen eines Betriebsparameters eines Motors (10) umfasst.

12. Verfahren nach Anspruch 11, wobei der Betriebsparameter eine Schubanforderung für den Motor (10) oder eine Drehzahl des Motors (10) ist.

13. Verfahren nach einem der Ansprüche 10 bis 12, ferner umfassend Bereitstellen des Signals, das die Bypassöffnung anzeigt, zu einer Benutzerschnittstelle (50) .

14. Nichtflüchtiges, computerlesbares Speichermedium (51), auf dem Anweisungen gespeichert sind, die, wenn sie durch einen oder mehrere Prozessoren (52) ausgeführt werden, ein System (40) veranlassen zum:
- Messen einer Temperatur eines Fluids (F1) stromabwärts eines Wärmetauschers (41), wobei der Wärmetauscher (41) einen Bypass (42) aufweist;
- Bestimmen eines Gradienten der Fluidtemperatur;
- Detektieren einer Bypassöffnung basierend auf dem Gradienten der Fluidtemperatur; und
- Bereitstellen eines Signals, das die Bypassöffnung anzeigt, in Reaktion auf die Detektion der Bypassöffnung.

## Revendications

1. Système (40) pour détecter un blocage d'échangeur de chaleur, comprenant :
- un échangeur de chaleur (41) et une dérivation (42) pour l'échangeur de chaleur (41) ;
- un capteur de température (43) pour mesurer une température d'un fluide (F1, F2) en aval de l'échangeur de chaleur (41) ; le système étant **caractérisé par**
- un système de commande (45) adapté pour déterminer un gradient de la température de fluide, pour détecter une ouverture de dérivation sur la base du gradient de la température de fluide, et pour fournir un signal indiquant l'ouverture de dérivation en réponse à la détection de l'ouverture de dérivation.

2. Système (40) selon la revendication 1, dans lequel le système de commande (45) est adapté pour détecter une ouverture de dérivation en réalisant une comparaison d'une valeur ou signature, sur la base de la température de fluide mesurée, à une valeur ou signature prédéterminée.

3. Système (40) selon la revendication 1 ou 2, dans lequel une soupape (46) est agencée sur la dérivation (42).

4. Système (40) selon la revendication 3, dans lequel la soupape (46) est une soupape mécanique, adaptée pour être ouverte par un fluide (F1) en amont et/ou à l'intérieur de l'échangeur de chaleur (41) lorsqu'une pression dans le fluide (F1) dépasse un seuil prédéterminé.

5. Système (40) selon l'une quelconque des revendications précédentes, dans lequel l'échangeur de chaleur (41) est un refroidisseur d'huile par carburant.

6. Système (40) selon la revendication 5, dans lequel le capteur de température (43) est agencé pour mesurer une température de carburant ou une température d'huile.

7. Système (40) selon l'une quelconque des revendications précédentes, dans lequel le capteur de température (43) est agencé pour mesurer une température de carburant et un capteur de température supplémentaire (44) est agencé pour mesurer une température d'huile, dans lequel la détection d'une ouverture de dérivation comprend la réalisation d'une comparaison à des valeurs prédéterminées sur la base des températures d'huile et de carburant mesurées par les capteurs de température (43, 44).

8. Système (40) selon l'une quelconque des revendications précédentes, dans lequel la dérivation (42) raccorde une conduite (48) en amont de l'échangeur de chaleur (41) à une conduite (49) en aval de l'échangeur de chaleur (49).

9. Aéronef (8), comprenant le système (40) selon l'une quelconque des revendications précédentes.

10. Procédé de détection d'un blocage d'échangeur de chaleur, comprenant :
- la mesure (S1) d'une température d'un fluide (F1, F1) en aval d'un échangeur de chaleur (41), l'échangeur de chaleur (41) ayant une dérivation (42) ;
- la détermination (S2) d'un gradient de la température de fluide ;
- la détection (S3) d'une ouverture de dérivation sur la base du gradient de la température de fluide ; et
- la fourniture (S4) d'un signal indiquant l'ouverture de dérivation en réponse à la détection de l'ouverture de dérivation.

11. Procédé selon la revendication 10, dans lequel la détection de l'ouverture de dérivation comprend en outre la détermination d'un paramètre de fonctionnement d'un moteur (10).

12. Procédé selon la revendication 11, dans lequel le paramètre de fonctionnement est un besoin de poussée pour le moteur (10) ou un régime du moteur (10).

13. Procédé selon l'une quelconque des revendications 10 à 12, comprenant en outre la fourniture du signal indiquant l'ouverture de dérivation à une interface utilisateur (50).

14. Support non volatile de stockage lisible par ordinateur (51), ayant des instructions stockées, sur celui-ci, qui, lorsqu'elles sont exécutées par un ou plusieurs processeurs (52), amènent un système (40) à :
- mesurer une température d'un fluide (F1) en aval d'un échangeur de chaleur (41), l'échangeur de chaleur (41) ayant une dérivation (42) ;
- déterminer un gradient de la température de fluide ;
- détecter une ouverture de dérivation sur la base du gradient de la température de fluide ; et
- fournir un signal indiquant l'ouverture de dérivation en réponse à la détection de l'ouverture de dérivation.
